# EUROPÄISCHE PATENTSCHRIFT

(11) **EP 0 895 565 B1**
(45) Veröffentlichungstag und Bekanntmachung des Hinweises auf die Patenterteilung: **17.05.2000**
(21) Anmeldenummer: 98901435.2
(22) Anmeldetag: 11.02.1998
(51) Int. Cl.: F02G 3/02, F02B 75/02

(54) **VERBRENNUNGSMOTOR**
INTERNAL COMBUSTION ENGINE
MOTEUR A COMBUSTION INTERNE

(30) Priorität: 14.02.1997 EP 97102496
(43) Veröffentlichungstag der Anmeldung: 10.02.1999
(73) Patentinhaber: Andonov, Kalin, 5310 Mondsee (AT)
(72) Erfinder: Andonov, Kalin, 5310 Mondsee (AT)
(86) Internationale Anmeldenummer: IB9800170
(87) Internationale Veröffentlichungsnummer: WO9839562

(56) Entgegenhaltungen:
- EP-A- 0 421 033
- US-A- 4 133 172
- US-A- 4 149 370
- US-A- 5 499 605

## Beschreibung

### 1 BESCHREIBUNG DER ERFINDUNG

### Aus dem Gebiet der Thermodynamik

### 2 BEZEICHNUNG DER ERFINDUNG

Verbrennungsmotor :
mit innerer Verbrennung
mit eigenem thermodynamischen Zyklus
mit Verbrennung in separater Energieverbrennungskammer unter Hochdruck
mit zyklischer (unterbrochener Verbrennung) oder dauerhafter (ununterbrochener) Verbrennung.

### 3 TECHNISCHES GEBIET, AUF DAS SICH DIE ERFINDUNG BEZIEHT

Die Erfindung bezieht sich auf Verbrennungsmotoren, die sehr häutig zum Einsatz kommen.

Der Verbrennungsmotor oder die Brennkraftmaschine ist eine Kolbenwärmekraftmaschine mit innerer Verbrennung. Ihr Arbeitsprozeß ist offen und unterscheidet sich durch die Gemischbildung, Zündung und Verbrennung, sowie durch Ladungswechsel(im Zwei- oder Viertaktverfahren).

Die jetzt meist gebauten Verbrennungsmotoren sind der OTTO und der DIESEL Motor.

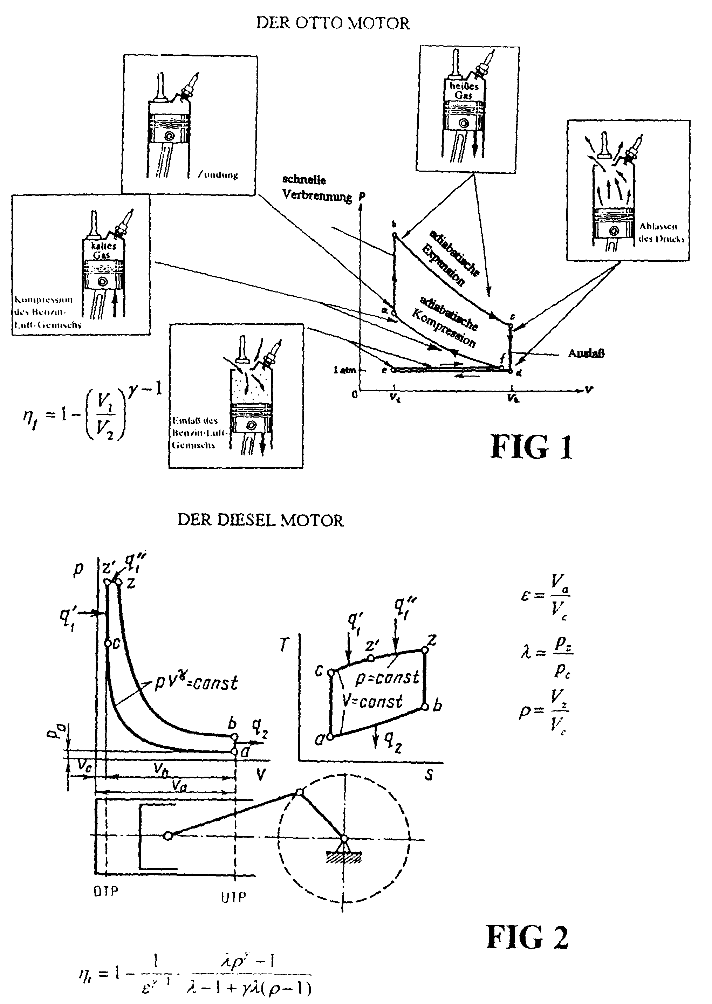

Die Fig 1 und 2 zeigen die PV und TS Diagramme, sowie ηₜ, den thermischen Wirkungsgrad, der beiden Motoren. Mein Motor ist ein Verbrennungsmotor mit innerer Verbrennung und arbeitet mit eigenem thermodynamischem Zyklus (anders als bei Otto und bei Diesel). Die Konstruktion ist auch anders. Der Verbrennungsprozeß ist mit zwei Adiabaten, so daß mehr mit OTTO und DIESEL zu vergleichen ist als andere Motoren wie Gasturbinen, Erikson oder Stirling Motor zum Beispiel, die völlige Abweichungen im Verbrennungsprozeß oder Konstruktion haben.

### 4 EINSCHLÄGIGER STAND DER TECHNIK MIT FUNDSTELLEN

Die Aufgabe der Konstrukteuren war es einen hohen thermischen Wirkungsgrad zu erreichen, der einem geringeren Spritverbrauch entspricht. Das Hauptproblem bei Otto ist, daß die Kompressionsverhältniserhöhung beschränkt ist, so daß bei hohem Kompressionsverhältnis 'Klopfen' auftritt. Es gibt auch Abweichung zwischen tatsächlichem und idealem Prozeß. Das Benzin mischt sich mit Restgasen, verbrennt nicht vollkommen. Die Kammerwände werden gekühlt, folglich geht Wärme in Kühlsysteme verloren. Beim Ladungswechsel treten Strömungs-, Aufheizungs-, Spül- und Undichtigkeitsverluste auf. Beim Otto Motor gibt es auch Leistungsherabsetzung durch Drosseln des Gemisches(die einem niedrigen Kompressionsverhältnis und thermischem Wirkungsgrad entspricht). In Folge verläuft die Verbrennung nicht vollkommen und qualitativ, sondern mit Entstehung von toxischen Stoffen und Wärmeverlusten.

Beim DIESEL Motor läuft die Verbrennung bei gemischten Wärmezufuhr Zyklus ab(Seiliger Prozeß). Aus thermodynamischer Sicht ist Wärmezufuhr bei konstantem P unerwünscht, da die Wärmezufuhr aus immer kleineren entsprechenden Verdichtungsverhältnissen folgt. Je weiter weg vom OTP die Wärme zugeführt wird, desto weniger wird von dieser Wärme in Nutzarbeit umgewandelt. Die Verbrennung erstreckt sich bei DIESEL Maschinen wegen der endlichen Einspritzdauer bis weit in die Expansion hinein. Beim DIESEL Motor ist das Kompressionsverhältnis relativ hoch, so daß die tatsächliche Wärmenutzung höher als OTTO ist. Ein hoher thermischer Wirkungsgrad beansprucht kürzere Zeit für die Einspritzung, Vermischung und Verbrennung des Sprits, kleine Aufheizungs-, Spül-, Strömungs- und Undichtigkeitsverluste, keine Vermischung mit Restgasen und keine Kammerwändekühlung. Ähnlich wie bei OTTO Motor gibt es Abweichung zwischen tatsächlichen und Idealprozesse. Das ist überhaupt für alle Verbrennungsmotoren gültig. So bleiben die effektive Wirkungsgrade auch bei modernen Gasturbinenmotoren meistens unter 35%. Dieselmotoren haben effektive Wirkungsgrade von etwa 40%; große aufgeladene, langsam laufende Motoren erreichen sogar Wirkungsgrade bis 52%. Die effektiven Wirkungsgrade von Ottomotoren liegen dagegen nur zwischen 25 und 35%. Verbrennungsmotoren mit Kompressoren und Expansionskolben, externen Verbrennungskammern und/oder Luftspeichern sind aus der US-A-4 133 172 und der US-A-4 149 370 bekannt.

Gegenstand der vorliegenden Erfindung ist ein Verbrennungsmotor mit separater Verbrennungskammer mit konstant hohem Druck, der mit einem eigenen thermodynamischen Zyklus arbeitet(anders als beim OTTO und DIESEL Motor).

Dieser Motor ist gebaut mit einer Konstruktion und Verbrennungsprozeß, der eine Ablehnung zur Ein-Kammer-Konstruktion ist. Meiner Meinung nach haben die OTTO und DIESEL Motoren vor allem deshalb so niedrige effektive Wirkungsgrade, weil die Komprimierung, Verbrennung und die Expansion in der selben Kammer sehr schnell verlaufen. Die Kammer selbst entspricht widersprüchlichen Bedienungen, bei Kompression zum Beispiel wird Wärmeübertragung gebraucht, aber bei der Expansion soll sie verhindert werden.

Der vorgestellte Motor hat eine innere Verbrennung, bei der die Komprimierung, Verbrennung und Expansion in verschiedenen Stellen(Kammer) ablaufen, welche das Gas eine nach der anderen durchläuft, indem es angesaugt, komprimiert, verbrannt, expandiert und zum Schluß ausgelassen wird. Die verschiedenen Kammern für Komprimierung, Verbrennung und Expansion sind "spezialisiert", das heißt, daß sie den Anforderungen der einzelnen Prozessen entsprechen. So zum Beispiel ist bei der Komprimierung eine Wärmeabfuhr möglich (nahezu isothermisch), in der Verbrennungs- und Expansionskammer dagegen ist eine kleine Wärmeübertragung nötig.

### 5 ZU LÖSENDE TECHNISCHE AUFGABE

Gegenstand der Erfindung ist ein Verbrennungsmotor des oben angeführten Typs, mit verbesserter Verbrennung, einem hohen Wirkungsgrad und kleinen Spritverbrauch gemäß Anspruch 1 bzw. 2. Eine solche Konstruktion erlaubt eine Verbesserung des Verbrennungsprozeß und vermeidet oder vermindert zum Großteil viele Schwachstellen, die für Otto und Diesel Motoren typisch sind, wie oben erwähnt.

### 6 DARSTELLUNG DER ERFINDUNG

Hier haben wir zwei Typen von Verbrennungen: Zyklische (unterbrochene Verbrennung) und die dauerhafte (ununterbrochene Verbrennung).

### 6/1.Verbrennungsmotor mit separater Verbrennungskammer unter konstantem Hochdruck und zyklischer Verbrennung:

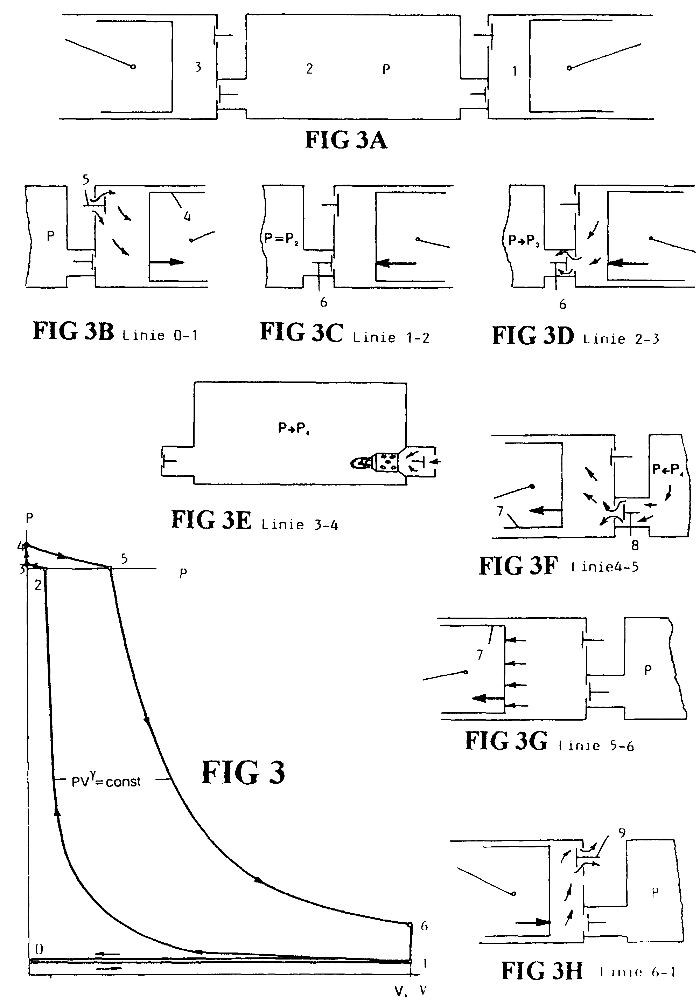

Fig 3, 5 und 7 zeigen einen derartigen Motor mit PV Diagrammen dazu. Er besteht aus der Komprimierungskammer 1 mit Zylinder und Kolben 4, Einlaßventil 5, Auslaßventil 6, Verbrennungskammer 2 mit Hochdruck P, indem die Verbrennung verläuft.

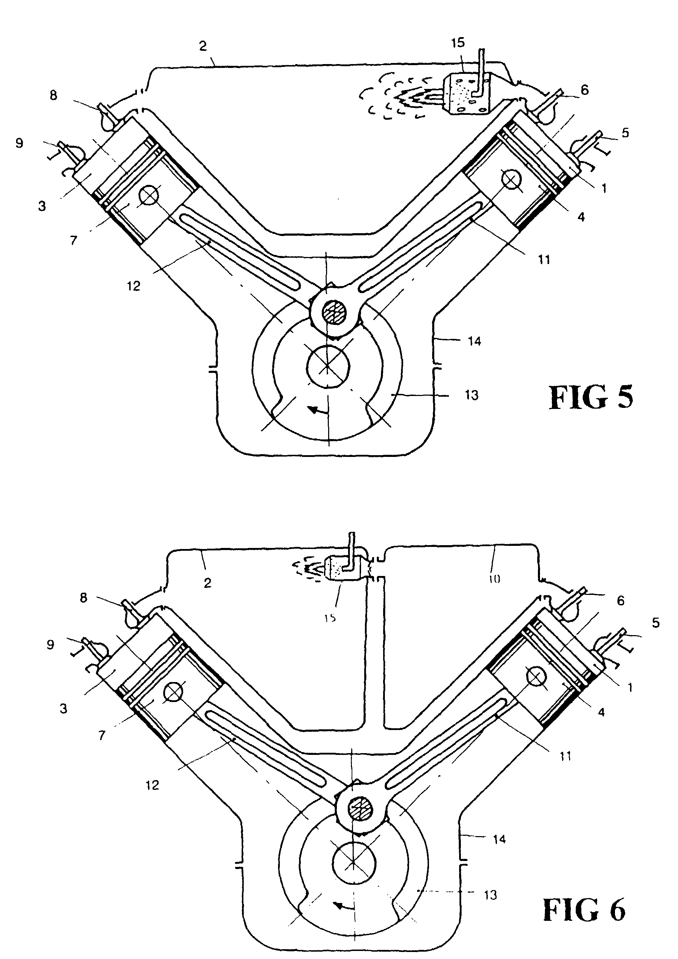

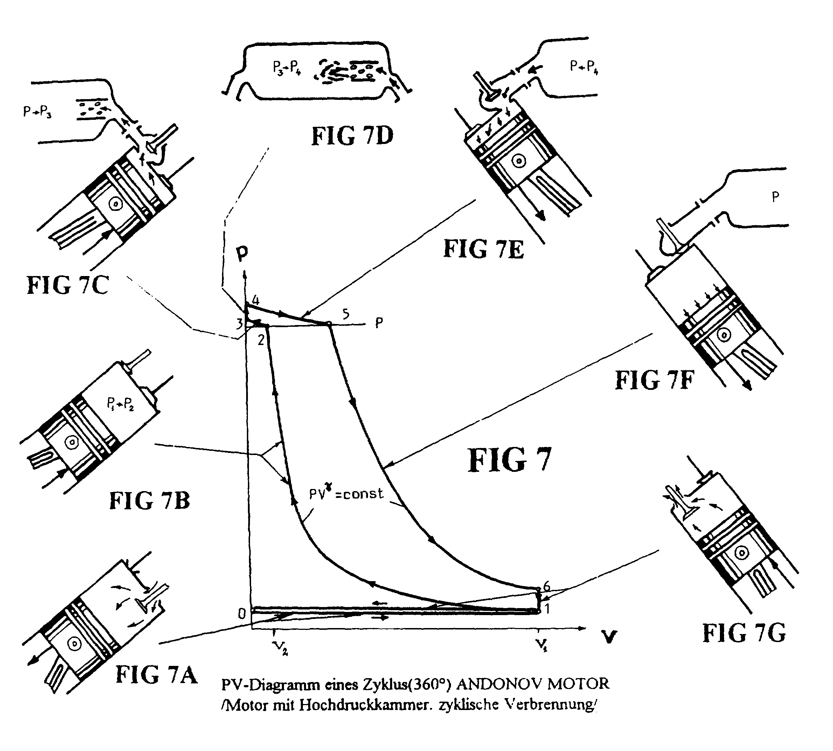

Die Kammer hat ein relativ großes Volumen, sodaß die Verbrennung bei einer Umdrehung (360°) zu einem relativ kleinen Druckanstieg ΔP führt. Diese Kammer ist normalerweise für hohe Werte des Druckes P bestimmt, zum Beispiel P über 50 bar, daß entspricht einem Verdichtungsverhältnis wie beim Diesel Motor. Es ist möglich auch Arbeit beim niedrigen Werte von P, aber eine größere vorteilhafte Verbrennung ist beim höhere Werte des Druck P zu erwarten. Je höher P desto größer ist der Wirkungsgrad bei einem solchen Motor. Die Verbrennungstemperatur bei voller Belastung ist sogar über 3000°K. Diese extreme Hitze erlaubt Verbrennungen verschiedener Brennstoffen: Gase, leichte und schwere Flüssigkeiten, mit verschiedenen Heizwerten, Physikalische und Chemische Eigenschaften. Auf Grund extremer Belastungen und hohen Temperaturen hat diese Kammer eine Wärmeisolierung, die kleine Wärmeverluste hat. 15 zeigt den Brenner und Zerstäuber in der Verbrennungskammer. Diese Kammer spielt eine wichtige **Funktion als Energiespeicher (Energieakkumulator, thermopneumatischer Akkumulator), Extremdruckminderer und Druckverteiler.** 3 ist die Expansionskammer (Expander) mit Zylinder und Kolben 7, Einlaßventil 8. Auslaßventil 9. Beide Kolben 4 und 7 sind mit Pleuelstangen 11 und 12 mit der Kurbelwelle 13 verbunden. Bei einer vollen Umdrehung (360°) wird im Kompressor Luft angesaugt und in die Verbrennungskammer gepreßt. Fig 3B und Fig 7A. zeigen das Ansaugen der frischen Luft im Kompressor bei geöffnetem Einlaßventil 5. Der Kolben bewegt sich vom oberen Totpunkt zum unterem Totpunkt und frische Luft wird von der Atmosphäre angesaugt. Fig 3C, 3D und Fig 7B, 7C zeigen die Verdichtung der frischen Luft in zwei Phasen. Der Kolben 4 bewegt sich vom unteren Totpunkt zum oberen Totpunkt. Das Einlaßventil ist geschlossen. Der Druck steigt adiabatisch an (Linie 1→2, in Fig 3C und 7B). Weil der Druck P in der Verbrennungskammer immer hoch ist, ist das Auslaßventil bis Druck P geschlossen (1. Phase). Bei Druck über P öffnet sich das Auslaßventil (Fig 3D und Fig 7C) und die gepreßte Luft strömt in die Verbrennungskammer (2. Phase). Das führt zum geringfügigen, adiabatischen Druckanstieg (Linie 2→3 in Fig 3 und 7). In der Verbrennungskammer ist der minimale Druck P immer konstant hoch. Die Luft kommt vom Kompressor zum Brenner 15 (Fig 5), wo der Sprit zerstreut, mit der Luft vermischt und schließlich verbrannt wird. Die Frische Luft aus dem Kompressor vermischt sich nicht mit den verbrannten Gasen in der Verbrennungskammer.

Da die Verbrennungskammer ein großes Volumen hat, erfaßt sie einen relativ kleinen Bereich beim Kammereingang im Brenner. Die Verbrennung führt zum Druck- und Temperaturanstieg in die Verbrennungskammer (Linie 3→4)( Fig 3E und 7D). Die Verbrennung findet nur in der Verbrennungskammer statt, und zwar am Eingang, sodaß die Temperaturen in der ganzen Kammer gleich hoch sind. Später gibt es keine Verbrennung nach Auslassen verbrannter Gase im Expander.

Die Kammer vermindert die Gasgeschwindigkeit. Je größer die Kammer ist, desto kleiner ist die Gasgeschwindigkeit. Mit einem oder mehreren Zerstreuber im Brenner wird Sprit in der verdichteten Luft eingespritzt, sodaß eine gute Vermischung gewährleistet ist und eine Verbrennung ohne Restgasmischung folgt. Das ist ein wesentlicher Unterschied zu Otto und Dieselmotoren, wo die Verbrennung bei relativ höher Gasgeschwindigkeit, mit Wirbeln in schnell expandierendem Volumen und Restgasmischung durchläuft. Die Folge ist eine unvollständige Verbrennung mit Schadstoffen.

Aus thermodynamischen Aspekten ist die Verbrennung mit konstantem Volumen die beste Verbrennung. Der erste Hauptsatz der Thermodynamik lautet, daß die in das System gegossene Wärme gleich an Zunahme an innerer Energie plus vom System geleistete Arbeit ist. Laut dem ersten thermodynamischem Gesetz führt die Verdichtung - Linie 2→3 ( Fig 3D und 7C) (die vom System geleistete Arbeit) zu geringfügiger Zunahme an innerer Energie (Druck- und Temperaturanstieg), Linie 3→4 ist die Verbrennung (Wärmezufuhr bei konstantem Volumen). Die im System geflossene Wärme führt noch weiter zur Zunahme an innerer Energie in der ganzen Verbrennungskammer. Als Resultat kommt ein relativ kleiner, gleichmäßig verteilter Temperatur und Druckanstieg in der ganzen Kammer zustande. Die Kammer spielt eine Rolle als Druckverminderer und Druckverteiler, die ganze Energie wird später bei der Expansion vollständig abgegeben, sodaß die Kammer auch eine Rolle als Energiespeicher (thermopneumatischer Akkumulator) hat. Das ist ein wesentlicher Unterschied zu den Otto- und Dieselmotoren.

Der Verbrennungsprozeß ist im OTP versteckt. Für eine vollständige Verbrennung stehen z.B.: über 300° (Drehwinkel) zur Verfügung, sodaß es genug Zeit für eine vollständige Verbrennung gibt und die Verbrennung ist kein Hindernis für hohe Drehzahlen.

Linie 4→5 (Fig 3F und Fig 7E) zeigt die adiabatische Ausdehnung - die vom System geleistete Arbeit führt zur Abnahme an innerer Energie in der gesamten Verbrennungskammer, sodaß das ursprüngliche Energieniveau und Druck wieder erreicht ist.

Wenn die Verbrennung in der Verbrennungskammer Vollständig beendet ist und der Druck P₄ erreicht wird, öffnet sich das Ventil 8 zum Expander 3 und die Gase von der Verbrennungskammer strömen zum Expander. Dann bewegt sich der Kolben 7 ( Fig 5) im Expander vom oberen Totpunkt zum unteren. Der Druck sinkt adiabatisch (Linie 4→5). Ventil 8 ist geöffnet bis der Druck P₅=P. Dann schließt sich Ventil 8 und es strömen keine verbrannten Gase mehr von der Verbrennungskammer ( Fig 3G und Fig 7F ). Der Kolben bewegt sich weiter nach unten (Linie 5→6), die Gase dehnen sich adiabatisch aus bis Punkt 6. Dann wird das Auslaßventil geöffnet und die verbrannten Gase werden in die Atmosphäre ausgelassen (Linie 6→1). Der Kolben bewegt sich weiter zum oberen Totpunkt und stößt den Rest der Gase in die Atmosphäre (Linie 1→0).

### 6/2. Verbrennungsmotor mit ununterbrochener Verbrennung in separater Verbrennungskammer mit Hochdruck und mit einem Hochdruckreservoir.

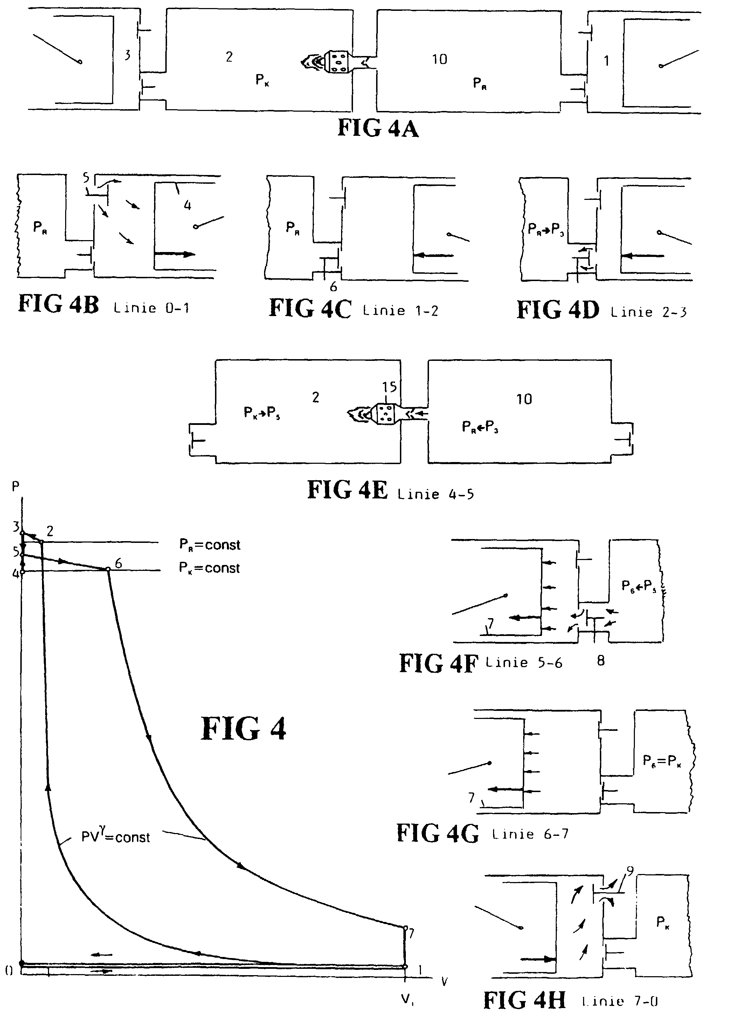

Die Fig 4,6 und 8 zeigen einen derartigen Motor. Er besteht aus der Komprimierungskammer 1 mit den Zylinder und Kolben 4. Einlaßventil 5 und Auslaßventil 6, Luftreservoir 10 mit hochdruck P_{R}> P_{K} Verbrennungskammer 2 mit Hochdruck P_{K}, wo die Verbrennung abläuft. Beide Kammern sind mit relativ großem Volumen, sodaß der Anstieg des Luftdrucks im Luftreservoir 10, ΔP_{R} bei einer Umdrehung (360°) relativ klein ist. Bei einer Umdrehung (360°) steigt der Druck in der Verbrennungskammer ΔP_{K} relativ wenig an. Der Druck in beiden Kammern ist relativ hoch zum Beispiel über 50 Bar, je höher desto größer ist der Wirkungsgrad eines derartigen Motor. Die Temperatur in der Verbrennungskammer ist hoch, bei voller Belastung sogar über 3000°K, daß heißt, es ist eine extrem heiße Kammer, die Verbrennung erlaubt eine große Palette verschiedener Fluiden.

Auf Grund extremer Belastung und hoher Temperaturen ist die Verbrennungskammer mit guter Wärmeisolierung gebaut, die kleine Wärmeverluste erlaubt. 15 zeigt den Brenner und den Zerstäuber in der Verbrennungskammer. Das Luftreservoir 10 und die Verbrennungskammer 2 **spielen eine wichtige Funktion als Energiespeicher (Energieakkumulator, thermopneumatischer Akkumulator), Extremhochdruckminderer und Druckverteiler.**

3 in Fig 6 ist die Expansionskammer (Expander) mit Zylinder und Kolben 7. Beide Kolben (4 und 7) sind mit Pleuelstangen 11 und 12 und mit Kurbelwellen 13 verbunden.

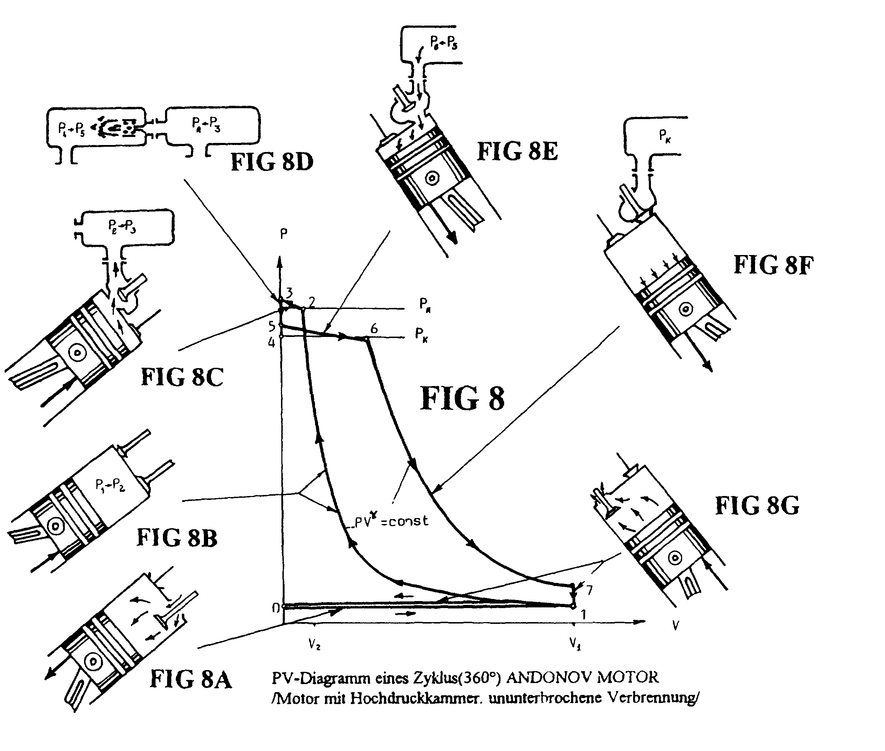

Bei einer vollen Umdrehung (360°) wird im Kompressor Luft eingesaugt und im Luftreservoir 10 gepreßt. Fig 4B und Fig 8A zeigen das Ansaugen der frischen Luft im Kompressor bei geöffnetem Einlaßventil. Der Kolben bewegt sich vom oberen Totpunkt zum unteren Totpunkt. Einlaßventil 5 ist geöffnet und die frische Luft wird von der Atmosphäre in die Komprimierungskammer eingesaugt. Fig 4C, 4D, 8B, 8C zeigen die Komprimierung der frischen Luft (adiabatisch) in zwei Phasen im Luftreservoir. Der Kolben bewegt sich vom unteren Totpunkt zum oberen Totpunkt. Einlaßventil 5 ist geschlossen. Der Druck steigt adiabatsich an (Linie 1-2, Fig 4 und 8). Der Druck P_{R} im Luftreservoir ist immer hoch. Beim der Druck über P₂=P_{R} öffnet sich das Auslaßventil 6 und die gepreßte Luft kommt zum Luftreservoir. Das führt zum geringfügigem Druckanstieg im Luftreservoir bis Druck P₃ (Linie 2-3, Fig 4D, Fig 8C).

Der Luftreservoir hat ein relativ großes Volumen. Der Druckanstieg ΔP_{R} ist relativ klein. Es strömt weiter ununterbrochen Luft vom Luftreservoir zur Verbrennungskammer. Der Druck P_{K} in der Verbrennunskammer ist immer hoch.

Die Luft strömt ununterbrochen vom Luftreservoir zum Brenner 15, wo im Kammereingang Sprit zerstreut wird, sich mit Luft vermischt und schließlich verbrennt. In der Verbrennungskammer vermischt sich die Luft vom Luftreservoir nicht mit verbrannten Restgasen. Das ist ein Unterschied mit den OTTO und Diesel Motoren. Die Verbrennung erfaßt nur einen relativ kleinen Bereich am Eingang der Kammer beim Brenner, weil die Verbrennungskammer ein relativ großes Volumen hat.

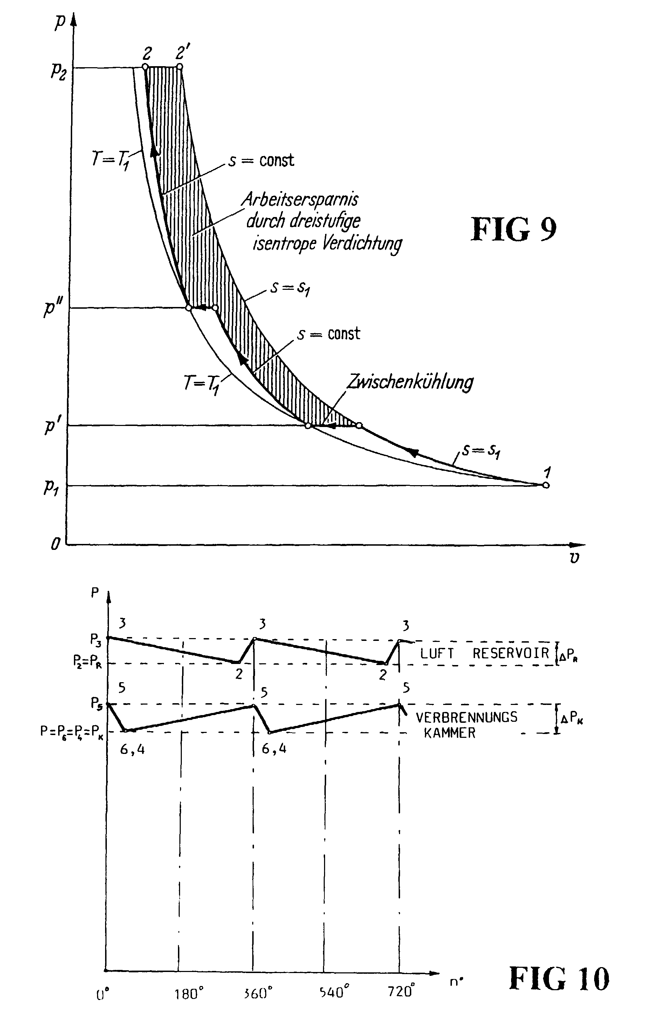

Die ununterbrochene Verbrennung führt zum Temperatur- und Druckanstieg ΔP_{K} in der Verbrennungskammer ( Fig 10) von P₄ bis P₅, ( Linie 4-5 Fig 4E, 8D ). Die Verbrennung findet nur in der Verbrennungskammer statt (vorwiegend Verbrennung mit konstantem Volumen). Es gibt keine Verbrennung im Expander. Die Verbrennung läuft in Hochdruckkammern mit relativ niedriger Gasgeschwindigkeit ohne Wirbel und Restgasmischung. Die Ganze Verbrennung oder Wärmezufuhr ist gleich oder ungleichmäßig in 360° (eine Drehung) verteilt, sodäß, anders als bei OTTO und Diesel, die Verbrennung ganz extensiv ist. Wie sich der Druck im Luftreservoir und in der Verbrennungskammer bei gleichmäßiger Wärmezufuhr verändert zeigt Fig 10. Von Punkt 2 bis 3 öffnet sich das Auslaßventil im Kompressor und frische Luft wird vom Kompressor zum Luftreservoir gepreßt. Der Druckanstieg ΔP_{R} ist geringfügig. Weiter zeigt Linie 3-2 die ununterbrochene Luftzufuhr in der Verbrennungskammer, sodaß der Luftdruck sinkt und für eine volle Umdrehung (360°) wieder ein Wert P_{R} beim Punkt 2 erreicht.

Die Luft vom Luftreservoir strömt ununterbrochen zur Verbrennungskammer, wo sie sich mit Sprit vermischt und verbrennt, welches zum Druckanstieg ΔP_{K} führt (bis Druck P₅ bei Punkt 5 Linie 4-5). Dann öffnet sich der Ventil 8 zum Expander und verbrannte Gase strömen hinein. Das dauert bis Druck P₆=P erreicht ist. Dann schließt das Ventil und der Druck kann weiter steigen bis Druck P₅. Für eine volle Umdrehung (360°) gibt es einen Anstieg bis P₅ und einen Abstieg bis P.

Der Druck P_{R} ist immer größer als der Druck P₅ (maximaler Druck) in Verbrennungskammer, sodaß eine ununterbrochene Luftzufuhr vom Luftreservoir zur Verbrennungskammer gewährleistet ist.

Die Verbrennung in diesem Motor zum Unterschied von den Motoren mit zyklischer Verbrennung ist eine ununterbrochene Wärmezufuhr, im Hochdruckbereich.

Wenn die Wärmezufuhr konstant in einer Umdrehung bleibt, gibt es einen **stationär fließenden Verbrennungsprozeß**.

Fig 4G, 8F zeigen die adiabatische Ausdehnung bei geschlossenem Einlaßventil 8 bis Druck P₇. Bei Druck P₇ öffnet sich das Auslaßventil 9 und verbrannte Gase strömen hinaus. Fig 4H, 8G zeigen das Ausstoßen der Restgase (Linie 1-0). Der Kolben bewegt sich vom unteren zum oberen Totpunkt. Bei Punkt 0 schließt das Auslaßventil wieder.

Zur Verbrennungskammer: Wichtig ist, daß sie eine gute Wärmeisolierung haben muß, weil hier Temperaturen sogar über 3000°K herrschen. Ein Wärmeverlust führt zur Wirkungsgradsenkung.

### 7 VORTEILHAFTE WIRKUNGEN DER ERFINDUNG

Diese Motoren mit beiden Modifikationen weisen viele Vorteile auf: Der Verbrennungsprozeß ist auf drei Kammern(Stellen) aufgeteilt, so daß die Verdichtung, Verbrennung und Expansion unabhängig von einander ablaufen. Eine negative Auswirkung von einem Prozeß zum anderen ist ausgeschlossen, z.B. weist die Komprimierung keine Auswirkung auf die Expansion auf, so daß die Spülverluste ausgeschlossen sind. Ein Zylinder, der nur für die Verdichtung spezialisiert ist, liefert mehr Luft in die Verbrennungskammer, als es der Fall bei Otto und Diesel Motor ist, wo es eine große Abweichung zwischen tatsächliche und theoretische eingesaugte frische Luft gibt. Bei hohen Kolbengeschwindigkeit zum Beispiel (bei Otto und Diesel) ist die tatsächliche eingesaugte Luft bis fast 50% von den theoretischen Werten abweichend. Eine Konstruktion (Zylinder und Kolben) nur für Verdichtung weist weniger Widerständen der Rohrleitungen, Kanäle und Steuerorgane(Ventile), so daß die Strömungsverluste relativ klein sind. Die Aufheizung der Ladung (OTTO und DIESEL) erfolgt an den heißen Wänden der Zylinderräume, insbesondere aber an den Auslaßventilen und Zündkerzen. Bei meinem Motor aber sind die Zylinderwände wenig heiß, deswegen sind die Aufheizungverluste relativ klein. Analog betrachtet treten Undichtigkeitsverluste und Reibungsverluste in verminderten Wert auf.

Fig 5 zeigt einen Motor mit unterbrochener Verbrennung und Fig 6 zeigen einen Motor mit ununterbrochener Verbrennung, wo ein Zylinder für die Verdichtung die gleichen Dimensionen wie ein Zylinder für Expansion hat, so sind Kolbendurchmesser und Kolbenhub für beide Zylinder gleich. Es ist eine Konstruktion möglich bei der Kolbendurchmesser und Kolbenhub in der Verdichtungskammer und im Expander unterschiedliche Größen hat. In Fig 5 und 6 sind der Verdichter und Expander fest zusammengebunden mit Kurbelwelle 13. Mein Motor erlaubt noch größere Konstruktionsfreiheit so ist möglich, daß der Verdichter getrennt und nicht fest zussamengebunden mit der Kurbelwelle ist. Die Verdichterdrehzahlen können unterschiedliche Werte als die Expanderdrehzahlen sein. In diesem Fall wird die Verdichtungszylinderzahl entsprechend größer oder kleiner als die Expansionszylinderzahl. Eine intensive Zwischenkühlung ist nicht gezeigt, aber sie ist einsetzbar. Es ist auch eine Einsetzung von mehrstufigen Verdichter möglich. Fig 9 zeigt nämlich eine dreistufige isentrope Verdichtung mit Zwischenkühlung und damit realisierte Arbeitsersparnis (gestrichene Fläche), so verläuft die Komprimierung annäherend isothermisch, die zu einem höheren Wirkungsgrad bei hohen Belastungen führt.

Die Verbrennung verläuft in der Verbrennungskammer unterbrochen oder ununterbrochen ohne Restgasmischung mit relativ kleiner Gasgeschwindigkeit ohne Wirbel und ohne größere thermische Verluste, da die Kammer thermisch isoliert ist. Die Konstruktion erlaubt Arbeit mit größeren Verdichtungverhältnissen, die zu einem höherem Wirkungsgrad führen und das bei niedrigen Druck- und Temperaturamplituden, sodaß die Motorteile mit wenig Gewicht gebaut werden können. Es gibt keine Verbrennung außerhalb der Verbrennungskammer oder keine Verbrennung ohne Nutzarbeitumwandlung. Die Verbrennung ist kein Hindernis für höhere Drehzahlen.

Die Expansion findet in der Expansionskammer statt - ohne größere Wärmeverluste. Alles das führt zu einem höheren Wirkungsgrad, höhere Umdrehungszahlen, relativ kleines Gewicht, kleinem Spritverbrauch.

### 8 BEZEICHNUNG WENIGSTENS EINES WEGES ZUR AUSFÜHRUNG DER ERFINDUNG UNTER BEZUGNAHME DER ZEICHNUNGEN.

### Fig 5 zeigt einen Motor mit zyklischer oder unterbrochener Verbrennung.

1 zeigt die Verdichtungskammer, in der die Komprimierung abläuft
2 zeigt die Verbrennungskammer mit Hochdruck P.
3 zeigt die Expansionskammer, in der die Expansion stattfindet.
4 und 7 sind die Zylinderkolben
11 und 12 sind die Pleuelstangen.
13 ist die Kurbelwelle.

Bei einer ganzen Umdrehung (360°) der Kurbelwelle 13 wird das Ansaugen und Komprimieren in der Verdichtungskammer ausgeführt. Die ganze Frischluft wird in der Verbrennungskammer 2 abgegeben, wo Sprit eingespritzt wird. Die Verbrennungskammer 2 ist immer unter konstantem Hochdruck P. Nach der Verbrennung steigt der Druck geringfügig auf P+ΔP. Wegen der Geometrie des Motors, wie Fig 5 zeigt, hat der Sprit immer genug Zeit zur vollen Verbrennung, bis sich der Kolben 7 in der Expansionskammer 3 nach unten bewegt. Dann stoßen die Verbrennungsgase von der Verbrennungskammer 2 den Kolben 7 nach unten, der Druck in der Verbrennungskammer fällt von P+ΔP auf P. Dann wird die Öffnung zur Expansionskammer 3 geschlossen und es können keine Gase mehr von der Verbrennungskammer hineinströmen. Der Kolben 7 bewegt sich vom Druck der Gase über ihm weiter. Auf diese Weise wird thermische in mechanische Energie umgewandelt und es wird mechanische Arbeit ausgeführt. Bei der Bewegung des Kolbens 7 nach oben werden die Gase über den Kolben 7 vollständig in der Atmosphäre ausgestoßen.

### Fig 6 zeigt einen Motor mit ununterbrochener Verbrennung

1 zeigt die Verdichtungskammer, in der die Komprimierung abläuft
2 zeigt die Verbrennungskammer mit Hochdruck P_{K}
3 zeigt die Expansionskammer, in der die Expansion stattfindet
10 zeigt den Luftreservoir mit Hochdruck P_{R}>P_{K}
4 und 7 sind die Zylinderkolben
11 und 12 sind Pleuelstangen
13 ist die Kurbelwelle.

Bei einer ganzen Umdrehung (360°) der Kurbelwelle 13 wird das Ansaugen und Komprimieren in der Verdichtungskammer ausgeführt. Die ganze frische Luft wird in der Luftreservoir 10 gepreßt. Der Luftreservoir 10 ist immer unter Hochdruck größer als P_{R} und wenn der Luft vom Verdichter gepreßt wird steigt der Druck im Luftreservoir geringfügig auf P_{R}+ΔP_{R}. Weiter folgt eine ununterbrochene Luftzufuhr vom Luftreservoir zur Verbrennungskammer, so daß bei einer Umdrehung (360°) der Druck im Luftreservoir sinkt von P_{R}+ΔP_{R} auf P_{R}.

Die Luft strömt ununterbrochen in die Verbrennungskammer, wo Sprit eingespritzt und schließlich verbrannt wird. Der Druck in der Verbrennungskammer ist immer über P_{K}(der minimale Druck in Verbrennungskammer). Die Verbrennung in der Verbrennungskammer führt zum Druckanstieg von P_{K} auf P_{K}+ΔP_{K}, (wo P_{K}+ΔP_{K}<P_{R} ist ) bei einer

Umdrehung(360°). Dann öffnet sich das Ventil 8 zum Expander und verbrannte Gase stoßen den Expanderkolben nach unten. Der Druck in der Verbrennungskammer sinkt von P_{K}+ΔP_{K} wieder auf P_{K}. Das Ventil 8 schließt wieder und keine verbrannten Gase strömen zur Expansionskammer mehr. Der Kolben 7 bewegt sich weiter nach unten vom Druck der verbrannten Gase über den Kolben 7, so wird thermische Energie in mechanische Arbeit ausgeführt. Bei der weiteren Bewegung des Kolbens 7 nach oben werden die Gase über den Kolben 7 vollständig in der Atmosphäre ausgestoßen.

## Patentansprüche

1. **Verbrennungsmotor mit separater Verbrennungskammer (2), unter permanenten Hochdruck, mit zyklischer Verbrennung und 360° Zyklus,** mit einer Komprimierungskammer (1) eines Kompressors, einer Expansionskammer (3) mit Zylinder und Kolben (7), Expander, das Volumen der Verbrennungskammer (2) ist relativ groß im Vergleich zum Volumen der Komprimierungskammer (1) ,die Verbrennungskammer (2) ist unter permanenten Hochdruck P,die ganze Verbrennung führt zu einer weiteren Druckerhöhung ΔP_{K}, die relativ klein ist, der Verbrennungsprozeß verläuft in folgenden Schritten:
a. Ansaugen der frischen Luft im Kompressor bei geöffneten Steuerorganen im Kompressor ; ***Ansaugtakt im Kompressor,***
b. Verdichtung der frischen Luft im Kompressor bis Druck P, dem Druck in der Verbrennungskammer ( 2 ) bei geschlossenen Steuerorganen im Kompressor : adiabatisch ohne Zwischenkühlung oder annähernd isothermisch mit Zwischenkühlung ; ***Verdichtungstakt im Kompressor,***
c. Komprimierung der Luft im Kompressor bei Druck größer als P bei geöffneten Steuerorganen im Kompressor, einlaß der Luft in der Verbrennungskammer (2) und geringfügige Druckerhöhung in der Verbrennungskammer (2); ***Ende des Verdichtungstaktes im Kompressor,***
d. Einlaß der Luft vom Kompressor zur Verbrennungskammer, bei geöffneten Steuerorganen bei Druck größer als P, Einspritzung und Verbrennung des Sprites im Kammereingang, relativ kleine Energieerhöhung, d.h. Druckerhöhung ΔP_{K} in der Verbrennungskammer bei ***const-V*** Verbrennung,
e. Einlaß der verbrannten Gase von der Verbrennungskammer in der Expansionskammer bei geöffneten Steuerorganen bis Druck P; adiabatische Ausdehnung; ***Arbeitstakt im Expander****,*
f. weitere adiabatische Ausdehnung der Gase in der Expansionskammer bei geschlossenen Steuerorganen; ***Arbeitstakt im Expander,***
g. Auslassen der verbrannten Gasse von der Expansionskammer in die Atmosphäre bei geöffneten Steuerorganen; ***Auslaßtakt im Expander.***

2. **Verbrennungsmotor mit separater Verbrennungskammer (2) unter permanenten Hochdruck, mit Druckluftreservoir (10) unter permanenten Hochdruck, größer als der Druck in der Verbrennungskammer, und mit dauerhafter oder ununterbrochener Verbrennung**, mit einer Komprimierungskammer (1) eines Kompressors, eine Expansionskammer (3) mit Zylinder und Kolben (7), Expander,das Volumen der Verbrennungskammer (2) ist relativ groß im Vergleich zum Volumen der Komprimierungskammer (1), die Verbrennungskammer (2) ist unter permanenten Hochdruck P_{K}, die ganze ununterbrochene Verbrennung findet im Kammereingang statt und fuhrt zu einer weiteren Druckerhöhung ΔP_{K}, die relativ klein ist, der Verbrennungsprozeß verläuft in folgenden Schritten:
a. Ansaugen der frischen Luft im Kompressor bei geöffneten Steuerorganen im Kompressor ; ***Ansaugtakt im Kompressor,***
b. Verdichtung der frischen Luft im Kompressor bis Druck P_{R}, dem minimale Druck in der Luftreservoir, bei geschlossenen Steuerorganen im Kompressor: adiabatisch ohne Zwischenkühlung oder annähernd isothermisch mit Zwischenkühlung; ***Verdichtungstakt im Kompressor; erste Phase,***
c. Komprimierung der Luft im Kompressor bei Druck größer als P_{R} bei geöffneten Steuerorganen im Kompressor, Einlaß der Luft ins Luftreservoir und geringfügige Druckerhöhung im Luftreservoir, von P_{R} bis P₃ ; ***Verdichtungstakt im Kompressor; zweite Phase,***
d. Ununterbrochene Luftzufuhr vom Luftreservoir zur Verbrennungskammer, Ununterbrochene Spriteinspritzung und Verbrennung des Sprites in der Verbrennungskammer, Verminderung des Druckes im Luftreservoir von P₃ auf P_{R} und Erhöhung des Druckes in der Verbrennungskammer von P_{K} bis P₅,
e. Einlaß der Gase bei geöffneten Steuerorganen von der Verbrennungskammer zur Expansionskammer, Verminderung des Druckes in der Verbrennungskammer von P₅ auf P_{K} und schließen den Steuerorgane bei Druck P_{K} ; ***Arbeitstakt im Expander,***
f. weitere adiabatische Expansion der Gase im Expander bei geschlossenen Steuerorganen bis Druck P₇ ; ***Arbeitstakt im Expander,***
g. Auslassen die verbrannten Gase vom Expander in der Atmosphäre bei geöffneten Steuerorganen ; ***Auslaßtakt im Expander.***

## Claims

1. **A combustion engine with a separate combustion chamber (2), under permanent high pressure, with cyclical combustion and 360° cycle,** with a compression chamber (1) of a compressor, an expansion chamber (3) with cylinder and piston (7), expander, the volume of the combustion chamber (2) is relativly big compared to the volume of the compression chamber (1), the combustion chamber (2) is under permanent high pressure **P**, the whole combustion leads to another high pressure increase **ΔP**_{**K**}, that is relativly small, the combustion process takes place in the following stages:
a. Suction of the fresh air into the compressor by opened control elements in the compressor; ***Intake stroke in the compressor,***
b. Compression of the fresh air in the compressor up to pressure **P**, the pressure in the combustion chamber (2) with closed control elements in the compressor: adiabaticly without intercooling or nearly isothermicely with intercooling; ***Compression stroke in the compressor,***
c. Compression of the air in the compressor by pressure bigger than **P** with opened control elements in the compressor, admission the air into the combustion chamber (2) and slightly pressure increase in the combustion chamber (2); ***The end of compressing stroke in the compressor;***
d. Admission of the air from compressor to the combustion chamber, with opened control elements by pressure bigger than **P**, injection and combustion of the fuel in the chamber entrance, relativly small energy increase, it means pressure increase **ΔP**_{**K**} in the combustion chamber by ***const-V*** combustion,
e. Admission of the combustioned gas from the combustion chamber into the expansion chamber with opened control elements down to pressure **P**; adiabatic expansion; ***Working stroke in the expander,***
f. Another adiabatic gas expansion in the expasion chamber with closed control elements; ***Working stroke in the expander,***
g. Exhaust the combustioned gas from the expansion chamber in the atmosphere with opened control elements;***Exhaust stroke in the expander***

2. **A combustion engine with a separate combustion chamber (2) under permanent high pressure, with a compressed air reservoir (10) under permanent high pressure, bigger with the pressure in the combustion chamber, and with continuous or uninterrupted combustion, ,** with a compression chamber (1) of a compressor, an expansion chamber (3) with cylinder and piston (7), expander, the volume of the combustion chamber (2) is relativly big compared to the volume of the compression chamber (1), the combustion chamber (2) is under permanent high pressure **P**_{**K**}**,** the whole continuous combustion take place in the chamber entrance and leads to another high pressure increase **ΔP**_{**K**}**,** that is relativly small, the combustion process takes place in the following stages:
a. Suction of the fresh air into the compressor by opened control elements in the compressor; ***Intake stroke in the compressor,***
b. Compression of the fresh air into the compressor up to pressure **P**_{**R**}**,** the minimal pressure in the air reservoir with closed control elements in the compressor: adiabaticly without intercooling or nearly isothermicly with intercooling; ***Compression stroke in the compressor;first phase,***
c. Compression the air in the compressor by pressure bigger than **P**_{**R**} with opened control elements in the compressor, admission of air into the air reservoir and slight pressure increase in the air reservoir from **P**_{**R**} to **P**_{**3**}**; *Compressing stroke in the compressor, second phase,***
d. Continuous air supply from the air reservoir into the combustion chamber, continuous fuel injection and combustion of the fuel in the combustion chamber, decrease of the pressure in the air reservoir from **P**_{**3**} to **P**_{**R**} and pressure increase in the combustion chamber from **P**_{**K**} to **P**_{**5**}**,**
e. Admission of the gas with opened control elements from the combustion chamber in to the expanding chamber, decrease of the presure in the combustion chamber from **P**_{**5**} to **P**_{**K**}**,** closing the control elements by pressure P_{K}; ***Working stroke in the expander,***
f. Another adiabatic gas expansion in the expander with closed control elements down to pressure **P**_{**7**}**; *Working stroke in the expander,***
g. Exhaust the combustioned gas from the expander into the atmosphere with opened control elements; ***Exhaust stroke in the expander.***

## Revendications

1. **Monteur thermique à chambre de combustion séparée (2), sous haute pression permanente, avec combustion cyclique et cycle de 360°,** comprenant une chambre de compression (1) d'un compresseur, une chambre d'expansion (3) avec cylindre et piston (7), détendeur, le volume de la chambre de combustion est relativement important par comparaison au volume de la chambre de compression (1), la chambre de combustion (2) est sous haute pression permanente P, la pleine combustion conduit à une hausse supplémentaire de la pression ΔP_{K}, qui est relativement faible, le processus de combustion se déroule comme suit:
a. aspiration de l'air frais dans le compresseur, les organes de commande du compresseur étant ouverts; ***aspiration dans le compresseur,***
b. densification de l'air frais dans le compresseur jusqu'à la pression P soit la pression régnant dans la chambre de combustion (2), les organes de commande du compresseur étant fermés; en mode adiabatique sans refroidissement intermédiaire ou en mode quasi isothermique avec refroidissement intermédiaire; ***compression dans le compresseur;***
c. compression de l'air dans le compresseur avec une pression supérieure à P, les organes de commandes du compresseur étan ouverts, admission de l'air dans la chambre de combustion (2) et légère-hausse da la pression dans la-chambre de combustion (2); ***fin de la compression dans le compresseur;***
d. admission de l'air du compresseur à la chambre de combustion, les organes de comande étant ouverts pour une pression supérieure à P, injection et combustion de l'essence à l'entrée de la chambre, hausse relativement faible d'énergie, à savoir hausse de pression ΔP_{K}, dans la chambre de combustion, pour une combustion ***const-V,***
e. admission des gaz brûlés de la chambre de combustion dans la chambre d'expansion, les organes de commande étant ouverts jusqu'à la pression P; expansion adiabatique; ***travail dans le détendeur,***
f. expansion adiabatique supplémentaire des gaz dans la chambre d'expansion, les organes de commande étant fermés; ***travail dans le détendeur;***
g. expulsion des gaz brûlés de la chambre d'expansion dans l'air atmosphérique, les organes de commande étant ouverts; ***échappement dans le détendeur***

2. **Moteur thermique à chambre de combustion séparée (2), sous haute pression permanente, avec réservoir d'air comprimé (10) sous haute pression permanente, supérieure à la pression régnant dans la chambre de combustion, et avec combustion durable ou noninterrompue,** comprenant une chambre de compression (1) d'un compresseur, une chambre d'expansion (3) avec cylindre et piston (7), détendeur, le volume de la chambre de combustion (2) est relativement important par comparaison au volume de la chambre de compression (1), la chambre de combustion (2) est sous haute pression permanente P_{K}, la pleine combustion continue a lieu à l'entrée de la chambre et provoque une hausse supplémentaire de la pression ΔP_{K}, qui est relativement réduite, le processus de combustion se déroule comme suit:
a. aspiration de l'air frais dans le compresseur, les organes de commande du compresseur étant ouverts; ***aspiration dans le compresseur,***
b. densification de l'air frais dans le compresseur jusqu'à la pression P_{R} soit la pression minimum régnant dans le réservoir d'air, les organes de commande du compresseur étant fermés; en mode adiabatique sans refroidissement intermédiaire ou en mode quasi isothermique avec refroidissement intermédiaire; ***compression dans le compresseur; première phase,***
c. compression de l'air dans le compresseur avec une pression supérieure à P_{R}, les organes de commandes du compresseur étant ouverts, admission de l'air dans le réservoir d'air et légère hausse de la pression dans le réservoir d'air, de P_{R} à P₃ ; ***compression dans le compresseur; deuxième phase,***
d. apport continu d'air du réservoir d'air à la chambre de combustion, injection continue de l'essence et combustion de l'essence à l'entrée de la chambre, baisse de la pression dans le réservoir d'air, de P₃ à P_{R}, et hausse de la pression dans la chambre de combustion, de P_{K} à P₅,
e. admission des gaz de la chambre de combustion dans la chambre d'expansion, baisse de la pression dans la chambre de combustion de P₅, à P_{K} et fermeture des organes de commande à la pression P_{K} ; ***travail dans le détendeur;***
f. expansion adiabatique supplémentaire des gaz dans la chambre d'expansion, les organes de commande étant fermés jusqu'à la pression P₇; ***travail dans le détendeur;***
g. expulsion des gaz brûlés de la chambre d'expansion dans l'air atmosphérique, les organes de commande étant ouverts; ***échappement dans le détendeur.***
